# EUROPEAN PATENT SPECIFICATION

(11) **EP 3 467 282 B1**
(45) Date of publication and mention of the grant of the patent: **13.05.2020**
(21) Application number: 17802480.8
(22) Date of filing: 13.04.2017
(51) Int. Cl.: F02B 39/14, F02B 33/40, F02B 39/00, F02B 39/10, F16C 35/06, H02K 1/28

(54) **ELECTRIC TURBO-MACHINE**
ELEKTRISCHE TURBOMASCHINE
TURBOMACHINE ÉLECTRIQUE

(30) Priority: 23.05.2016 JP 2016102486
(43) Date of publication of application: 10.04.2019
(73) Proprietor: Kabushiki Kaisha Toyota Jidoshokki, Kariya-shi, Aichi 448-8671 (JP)
(72) Inventor: OSHITA, Makio, Kariya-shi Aichi 448-8671 (JP); YAMAMICHI, Toshihiro, Kariya-shi Aichi 448-8671 (JP); UMEMURA, Satoshi, Kariya-shi Aichi 448-8671 (JP)
(74) Representative: TBK
(86) International application number: PCT/JP2017/015156
(87) International publication number: WO 2017/203881

(56) References cited:
- EP-A2- 0 342 515
- EP-A2- 2 397 744
- JP-A- 2006 009 685
- JP-A- 2006 009 685
- JP-A- 2012 102 700
- JP-A- 2012 515 287
- JP-A- 2015 017 538
- JP-U- S5 991 425
- US-A- 6 032 466
- US-A1- 2005 082 941

## Description

### TECHNICAL FIELD

The present invention relates to an electric turbomachine that rotates an impeller by rotating a rotary shaft driven by an electric motor.

### BACKGROUND ART

Patent Document 1 describes an example of an electric supercharger as an electric turbomachine known in the art. The electric supercharger includes a damper that absorbs shaft vibration at an end of the rotary shaft. The rotary shaft of the electric supercharger is rotationally supported in a housing by, for example, rolling bearings. An impeller is connected to one axial side of the rotary shaft. An electric motor that rotates the rotary shaft is accommodated in the housing. The housing also includes a suction port that suctions fluid, an impeller chamber that accommodates the impeller and is connected to the suction port, a discharge chamber into which fluid compressed by the impeller is discharged, and a diffuser passage connecting the impeller chamber and the discharge chamber.

The impeller rotates when the electric motor is driven and the rotary shaft is rotated. The centrifugal force of the rotating impeller imparts velocity energy to the fluid suctioned from the suction port. The fluid, which is provided with the velocity energy and increased in speed, is decelerated in the diffuser passage arranged at the outlet of the impeller. This converts the velocity energy of the fluid into pressure energy. The fluid that has been increased in pressure is discharged from the discharge chamber.

### PRIOR ART DOCUMENT

### PATENT DOCUMENT

Patent Document 1: Japanese Laid-Open Patent Publication No. 2012-102700

US 2005/082941 A1 discloses an electric turbomachine according to the preamble of claim 1. Further electric turbomachines are known from JP 2006 009685 A, EP 2 397 744 A2, EP 0 342 515 A2 and US 6 032 466 A.

### SUMMARY OF THE INVENTION

### PROBLEMS THAT ARE TO BE SOLVED BY THE INVENTION

Since the rolling bearing rotates together with the rotary shaft at a high speed, the temperature of the rolling bearing has a tendency to become high. This may cause seizure when lubrication is insufficient. Thus, lubricant needs to be supplied to a portion between the inner race and the outer race of the rolling bearing to lubricate and cool the bearing. However, in a structure such as that of Patent Document 1, the housing of the electric supercharger is machined to provide a lubricant supply passage. Such fine-machining of the housing is troublesome and thereby increases production costs. Thus, it is desirable that a lubricant supply mechanism efficiently supplies lubricant to the portion between the inner race and the outer race of the rolling bearing.

It is an object of the present invention to provide an electric turbomachine that efficiently supplies lubricant to a portion between the inner race and the outer race of the rolling bearing.

### MEANS FOR SOLVING THE PROBLEM

The object of the invention is achieved with an electric turbomachine according to claim 1. Further advantageous developments of the invention are subject-matter of the dependent claims.

### BRIEF DESCRIPTION OF THE DRAWINGS

Fig. 1 is a cross-sectional side view showing an electric turbomachine according to one embodiment.
Fig. 2A is an enlarged cross-sectional side view showing the periphery of a first oil supply member.
Fig. 2B is an enlarged plan view showing the periphery of the first oil supply member.
Fig. 3A is an enlarged cross-sectional side view showing the periphery of a second oil supply member.
Fig. 3B is an enlarged plan view showing the periphery of the second oil supply member.
Fig. 4 is an enlarged plan view showing the periphery of an oil supply member according to another embodiment.
Fig. 5 is a cross-sectional side view showing part of an electric turbomachine according to a further embodiment.

### EMBODIMENTS OF THE INVENTION

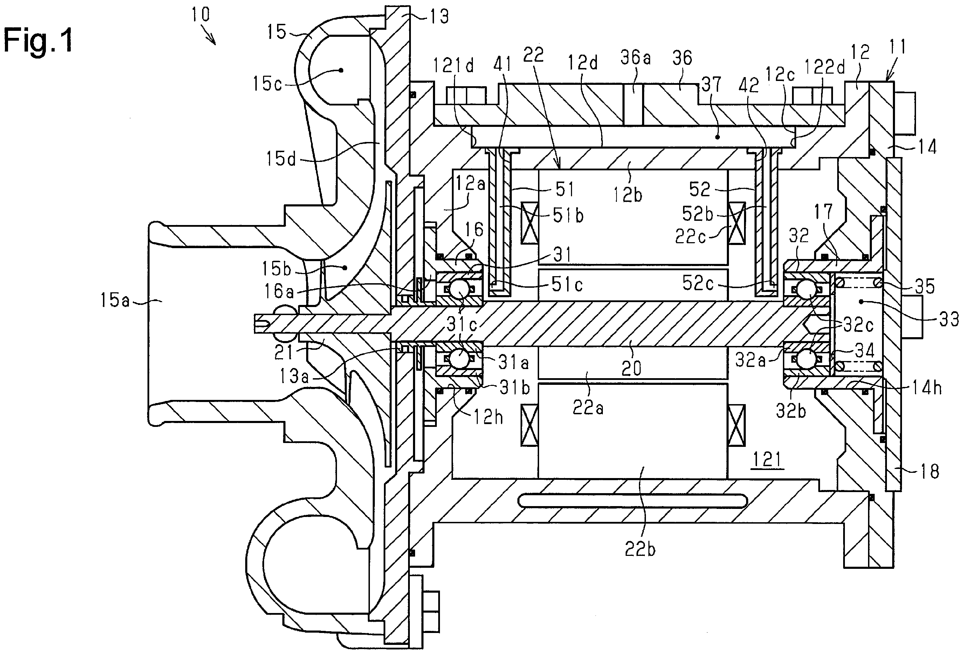

One embodiment of an electric turbomachine will now be described with reference to Figs. 1 to 3B. The electric turbomachine in the present embodiment is an electric supercharger mounted in the engine compartment of an automobile and used to compress and supply air as fluid to the engine.

As shown in Fig. 1, a housing 11 of an electric turbomachine 10 includes a tubular motor housing 12 having a closed end. The motor housing 12 includes a disc-like end wall 12a and a circumferential wall 12b extending from the circumferential edge of the end wall 12a in a tubular manner. Further, the housing 11 includes a first disc-like seal plate 13 connected to the outer surface of the end wall 12a of the motor housing 12 and a second disc-like seal plate 14 connected to an open end of the circumferential wall 12b of the motor housing 12. The housing 11 also includes a compressor housing 15 connected to the side of the first seal plate 13 opposite to the motor housing 12. The motor housing 12, the first seal plate 13, the second seal plate 14, and the compressor housing 15 are made of aluminum.

A first through hole 12h extends through the end wall 12a of the motor housing 12. A first tubular bearing case 16 is attached to the first through hole 12h. An annular engagement portion 16a protrudes from the inner circumferential surface of the first bearing case 16. A second through hole 14h extends through the second seal plate 14. A second tubular bearing case 17 is attached to the second through hole 14h. The first bearing case 16 and the second bearing case 17 are made of iron. The housing 11 includes a cover 18 attached to the second seal plate 14.

The electric turbomachine 10 includes a rotary shaft 20 rotationally supported in the housing 11. The rotary shaft 20 extends from the inside of the second bearing case 17 into the motor housing 12, passes through the first bearing case 16 and the first seal plate 13, and then protrudes into the compressor housing 15. A seal member 13a having a labyrinth seal is located between the rotary shaft 20 and the first seal plate 13. In the present embodiment, the side of the rotary shaft 20 that protrudes into the compressor housing 15 corresponds to one axial side of the rotary shaft 20, namely, the first side. The side of the rotary shaft 20 that is adjacent to the second bearing case 17 corresponds to the other axial side of the rotary shaft 20, namely, the second side. An impeller 21 is connected to one axial side of the rotary shaft 20, namely, the first side.

A space surrounded by the end wall 12a and the circumferential wall 12b of the motor housing 12 and the second seal plate 14 defines a motor chamber 121. The motor chamber 121 accommodates an electric motor 22 that rotates the rotary shaft 20. The electric motor 22 includes a rotor 22a rotated integrally with the rotary shaft 20, and a stator 22b surrounding the rotor 22a. Coils 22c are wound around the stator 22b. The rotary shaft 20 rotates integrally with the rotor 22a when the coils 22c are supplied with current.

The electric turbomachine 10 includes a first rolling bearing 31 serving as a rolling bearing that rotationally supports a portion of the rotary shaft 20 close to the impeller 21 in the axial direction of the rotary shaft 20. The first rolling bearing 31 is accommodated in the first bearing case 16.

The first rolling bearing 31 is an angular contact ball bearing including a first inner race 31a serving as an inner race, a first outer race 31b serving as an outer race, and a plurality of first balls 31c serving as rolling elements. The first inner race 31a is fixed to the rotary shaft 20. The first outer race 31b is arranged outward from the first inner race 31a. The first balls 31c are arranged between the first inner race 31a and the first outer race 31b. The first inner race 31a is press-fitted to the rotary shaft 20. The first outer race 31b is press-fitted to the inner circumferential surface of the first bearing case 16.

The electric turbomachine 10 includes a second rolling bearing 32 serving as a rolling bearing that rotationally supports a portion of the rotary shaft 20 further distant from the impeller 21 than the first rolling bearing 31 in the axial direction of the rotary shaft 20. Thus, the rotary shaft 20 is rotationally supported in the housing 11 by the first rolling bearing 31 and the second rolling bearing 32. The second rolling bearing 32 is accommodated in the second bearing case 17. The second rolling bearing 32 is arranged in the second bearing case 17 at an end opposite to the cover 18 in the axial direction of the rotary shaft 20.

The second rolling bearing 32 is an angular contact ball bearing including a second inner race 32a serving as an inner race, a second outer race 32b serving as an outer race, and a plurality of second balls 32c serving as rolling elements. The second inner race 32a is fixed to the rotary shaft 20. The second outer race 32b is arranged outward from the second inner race 32a. The second balls 32c are arranged between the second inner race 32a and the second outer race 32b. The second inner race 32a is press-fitted to the rotary shaft 20. The second outer race 32b is loosely fitted to the inner circumferential surface of the second bearing case 17.

The second bearing case 17 includes an accommodation chamber 33 between the second rolling bearing 32 and the cover 18 in the axial direction of the rotary shaft 20. The accommodation chamber 33 accommodates an annular washer 34 and a pressurization spring 35.

One end of the pressurization spring 35 abuts on the cover 18 and the other end of the pressurization spring 35 abuts on an end face of the second outer race 32b of the second rolling bearing 32 with the washer 34 located in between. The pressurization spring 35 is compressed in the axial direction of the rotary shaft 20 and arranged between the cover 18 and the washer 34. Thus, the cover 18 holds the pressurization spring 35. The pressurization spring 35 biases the second rolling bearing 32 in the axial direction of the rotary shaft 20 with the force of the compressed pressurization spring 35 acting to restore its original shape.

The biasing force of the pressurization spring 35 is transmitted to the second outer race 32b via the washer 34. The biasing force transmitted to the second outer race 32b is transmitted to the second inner race 32a via the second balls 32c to force the second inner race 32a toward the impeller 21 in the axial direction of the rotary shaft 20. The biasing force of the pressurization spring 35 is transmitted from the second inner race 32a to the rotary shaft 20, and the rotary shaft 20 moves toward the impeller 21 in the axial direction of the rotary shaft 20. The rotary shaft 20 abuts on the first inner race 31a of the first rolling bearing 31. The first balls 31c are forced toward the impeller 21 by the first inner race 31a in the axial direction of the rotary shaft 20 and pressed against the first outer race 31b. The first outer race 31b abuts on the engagement portion 16a of the first bearing case 16 when pressed by the first balls 31c.

In the electric turbomachine 10, when the impeller 21 is rotated, the impeller 21 generates a thrust force that acts to pull the rotary shaft 20 from the second rolling bearing 32 toward the first rolling bearing 31 in the axial direction of the rotary shaft 20. The first rolling bearing 31 and the second rolling bearing 32 rotationally support the rotary shaft 20 while receiving the thrust force via the rotary shaft 20.

The compressor housing 15 includes a suction port 15a, an impeller chamber 15b, a discharge chamber 15c, and a diffuser passage 15d. The suction port 15a suctions air (fresh air). The impeller chamber 15b is in communication with the suction port 15a and accommodates the impeller 21. Air compressed by the impeller 21 is discharged into the discharge chamber 15c. The diffuser passage 15d connects the impeller chamber 15b with the discharge chamber 15c. The impeller 21 rotates when the electric motor 22 is driven and the rotary shaft 20 is rotated. The centrifugal force of the rotating impeller 21 imparts velocity energy to the air suctioned from the suction port 15a. The air, which is provided with the velocity energy and increased in speed, is decelerated in the diffuser passage 15d arranged at the outlet of the impeller 21. This converts the velocity energy of the air into pressure energy. The air, which has been increased in pressure, is discharged from the discharge chamber 15c and supplied to the engine (not shown).

Part of the outer circumferential surface of the circumferential wall 12b of the motor housing 12 includes a recess 12c. The recess 12c includes a flat bottom surface 12d extending in the axial direction of the rotary shaft 20. The bottom surface 12d of the recess 12c has a first edge 121d in the axial direction of the rotary shaft 20 located at a position overlapping the first rolling bearing 31 in the radial direction of the rotary shaft 20. Further, the bottom surface 12d of the recess 12c has a second edge 122d in the axial direction of the rotary shaft 20 located at a position overlapping the second rolling bearing 32 in the radial direction of the rotary shaft 20.

A lid member 36 that closes the recess 12c is attached to the outer circumferential surface of the motor housing 12. The lid member 36 and the recess 12c define an oil supply unit 37 having empty space supplied with lubricant. Thus, in the present embodiment, the housing 11 includes the oil supply unit 37 supplied with lubricant. The lid member 36 has a supply hole 36a for supplying lubricant to the oil supply unit 37. The supply hole 36a is supplied with a portion of the engine oil serving as the lubricant.

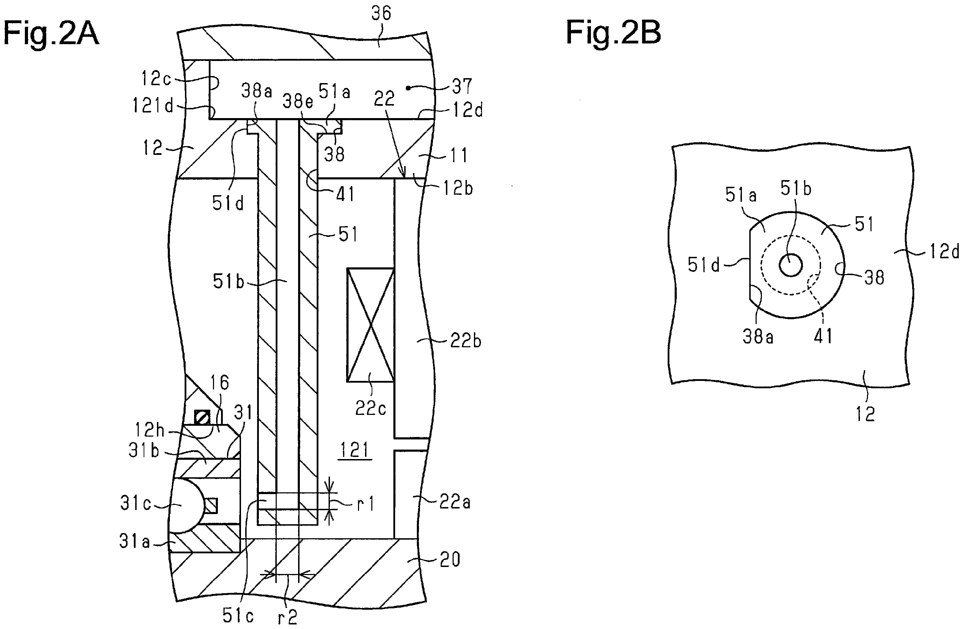

As shown in Fig. 2A, the bottom surface 12d of the recess 12c includes a first positioning recess 38 located toward the first edge 121d in the axial direction of the rotary shaft 20. The first positioning recess 38 includes a bottom surface 38e with a first insertion hole 41 serving as an insertion hole that extends in the radial direction of the rotary shaft 20. The first insertion hole 41 is in communication with the oil supply unit 37 via the first positioning recess 38. The first insertion hole 41 has the shape of a circular hole in a plan view and is in communication with the motor chamber 121.

As shown in Fig. 2B, the inner circumferential surface of the first positioning recess 38 has a wider diameter than the first insertion hole 41. The inner circumferential surface of the first positioning recess 38 partially includes a first straight portion 38a that extends straight. As shown in Fig. 2A, in the axial direction of the rotary shaft 20, the first straight portion 38a is located on a side of the bottom surface 12d of the recess 12c that faces the first edge 121d in the axial direction of the rotary shaft 20.

A circular-pipe shaped first oil supply member 51 is attached to the oil supply unit 37 (motor housing 12). The first oil supply member 51 extends straight. The first oil supply member 51 is inserted, from the outer side of the oil supply unit 37, into the first insertion hole 41 and protruded into the motor chamber 121 between the end wall 12a of the motor housing 12 and the electric motor 22 in the axial direction of the rotary shaft 20.

The first oil supply member 51 has an annular first securing portion 51a, which serves as a securing portion, at a first end adjacent to the oil supply unit 37. The first securing portion 51a extends in a direction orthogonal to the axial direction of the first oil supply member 51. The first securing portion 51a is secured to the bottom surface 38e of the first positioning recess 38, which is a wall facing the oil supply unit 37, around the first insertion hole 41 in the motor housing 12. Thus, the first oil supply member 51 is inserted, from the outer side of the oil supply unit 37, into the first insertion hole 41. The first securing portion 51a is secured to the bottom surface 38e of the first positioning recess 38 around the first insertion hole 41 to attach the first oil supply member 51 to the motor housing 12. As a result, the first oil supply member 51 is attached to the motor housing 12 such that the first oil supply member 51 extends in the radial direction of the rotary shaft 20.

The first oil supply member 51 has a first supply passage 51b serving as a supply passage. The first supply passage 51b extends inside the first oil supply member 51 in the axial direction in communication with the oil supply unit 37 at a first end of the first oil supply member 51. The first supply passage 51b has a circular shape in a plan view. Further, the first oil supply member 51 has a first ejection hole 51c serving as an ejection hole. The first ejection hole 51c is configured to be in communication with the first supply passage 51b and eject lubricant toward a portion between the first inner race 31a and the first outer race 31b of the first rolling bearing 31. The first ejection hole 51c is a circular hole. The first supply passage 51b extends in the radial direction of the rotary shaft 20, and the first supply passage 51b opens in the axial direction of the first oil supply member 51 at an end face of the first end of the first oil supply member 51. The first ejection hole 51c extends in the axial direction of the rotary shaft 20 and opens in an outer circumferential surface of the first oil supply member 51 at an end opposite to the oil supply unit 37 in the axial direction. The flow passage cross-sectional area of the first ejection hole 51c is smaller than the flow passage cross-sectional area of the first supply passage 51b. Specifically, the diameter r1 of the first ejection hole 51c is smaller than the diameter r2 of the first supply passage 51b.

As shown in Fig. 2B, the outer circumferential surface of the first securing portion 51a has a first outer circumferential portion 51d that extends straight along the first straight portion 38a of the first positioning recess 38. The first securing portion 51a is located in the first positioning recess 38, and the first outer circumferential portion 51d contacts the first straight portion 38a. This restricts movement of the first oil supply member 51 in the circumferential direction.

As shown in Fig. 2A, the first outer circumferential portion 51d contacts the first straight portion 38a to restrict movement of the first oil supply member 51 in the circumferential direction. In this state, the first ejection hole 51c opens in the outer circumferential surface of the first oil supply member 51 such that the first ejection hole 51c faces a portion between the first inner race 31a and the first outer race 31b in the axial direction of the rotary shaft 20. The first outer circumferential portion 51d and the first straight portion 38a form a positioning mechanism that positions the first oil supply member 51 relative to the motor housing 12 such that the first ejection hole 51c faces the portion between the first inner race 31a and the first outer race 31b.

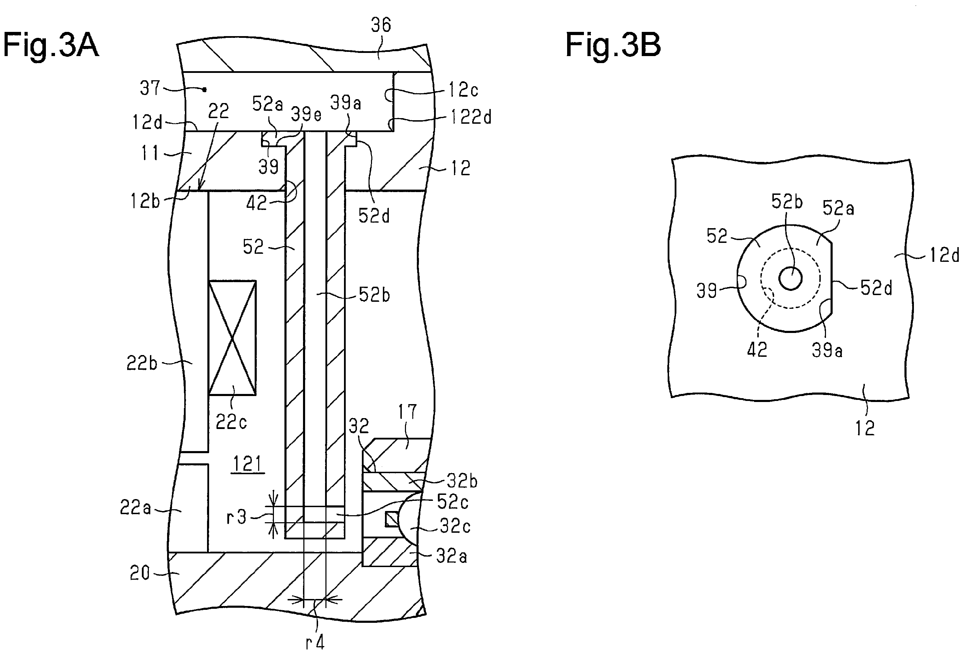

As shown in Fig. 3A, the bottom surface 12d of the recess 12c includes a second positioning recess 39 located toward the second edge 122d in the axial direction of the rotary shaft 20. The second positioning recess 39 includes a bottom surface 39e with a second insertion hole 42 serving as an insertion hole that extends in the radial direction of the rotary shaft 20. The second insertion hole 42 is in communication with the oil supply unit 37 via the second positioning recess 39. The second insertion hole 42 has the shape of a circular hole in a plan view and is in communication with the motor chamber 121.

As shown in Fig. 3B, the inner circumferential surface of the second positioning recess 39 has a wider diameter than the second insertion hole 42. The inner circumferential surface of the second positioning recess 39 partially includes a second straight portion 39a that extends straight. As shown in Fig. 3A, in the axial direction of the rotary shaft 20, the second straight portion 39a is located on a side of the bottom surface 12d of the recess 12c that faces the second edge 122d in the axial direction of the rotary shaft 20.

A second oil supply member 52 is attached, as a circular-pipe shaped oil supply member, to the oil supply unit 37 (motor housing 12). The second oil supply member 52 extends straight. The second oil supply member 52 is inserted, from the outer side of the oil supply unit 37, into the second insertion hole 42 and protruded into the motor chamber 121 between the second seal plate 14 and the electric motor 22 in the axial direction of the rotary shaft 20.

The second oil supply member 52 has an annular second securing portion 52a, which serves as a securing portion, at a first end adjacent to the oil supply unit 37. The second securing portion 52a extends in a direction orthogonal to the axial direction of the second oil supply member 52. The second securing portion 52a is secured to the bottom surface 39e of the second positioning recess 39, which is a wall facing the oil supply unit 37, around the second insertion hole 42 in the motor housing 12. Thus, the second oil supply member 52 is inserted, from the outer side of the oil supply unit 37, into the second insertion hole 42. The second securing portion 52a is secured to the bottom surface 39e of the second positioning recess 39 around the second insertion hole 42 to attach the second oil supply member 52 to the motor housing 12. As a result, the second oil supply member 52 is attached to the motor housing 12 such that the second oil supply member 52 extends in the radial direction of the rotary shaft 20.

The second oil supply member 52 has a second supply passage 52b serving as a supply passage. The second supply passage 52b extends inside the second oil supply member 52 in the axial direction in communication with the oil supply unit 37 at a first end of the second oil supply member 52. Further, the second oil supply member 52 has a second ejection hole 52c serving as an ejection hole. The second ejection hole 52c is configured to be in communication with the second supply passage 52b and eject lubricant toward a portion between the second inner race 32a and the second outer race 32b of the second rolling bearing 32. The second ejection hole 52c is a circular hole. The second supply passage 52b extends in the radial direction of the rotary shaft 20, and the second supply passage 52b opens in the axial direction of the second oil supply member 52 at an end face of the first end of the second oil supply member 52. The second ejection hole 52c extends in the axial direction of the rotary shaft 20 and opens in an outer circumferential surface of the second oil supply member 52 at an end opposite to the oil supply unit 37 in the axial direction. The flow passage cross-sectional area of the second ejection hole 52c is smaller than the flow passage cross-sectional area of the second supply passage 52b. Specifically, the diameter r3 of the second ejection hole 52c is smaller than the diameter r4 of the second supply passage 52b.

As shown in Fig. 3B, the outer circumferential surface of the second securing portion 52a has a second outer circumferential portion 52d that extends straight along the second straight portion 39a of the second positioning recess 39. The second securing portion 52a is located in the second positioning recess 39 and the second outer circumferential portion 52d contacts the second straight portion 39a. This restricts movement of the second oil supply member 52 in the circumferential direction.

As shown in Fig. 3A, the second outer circumferential portion 52d contacts the second straight portion 39a to restrict movement of the second oil supply member 52 in the circumferential direction. In this state, the second ejection hole 52c opens in the outer circumferential surface of the second oil supply member 52 such that the second ejection hole 52c faces a portion between the second inner race 32a and the second outer race 32b in the axial direction of the rotary shaft 20. The second outer circumferential portion 52d and the second straight portion 39a form a positioning mechanism that positions the second oil supply member 52 relative to the motor housing 12 such that the second ejection hole 52c faces the portion between the second inner race 32a and the second outer race 32b.

The operation of the present embodiment will now be described.

Lubricant supplied from the supply hole 36a to the oil supply unit 37 flows into the first supply passage 51b of the first oil supply member 51 and the second supply passage 52b of the second oil supply member 52. The lubricant, which has entered the first supply passage 51b and the second supply passage 52b, passes through the first supply passage 51b and the second supply passage 52b.

The lubricant, which has passed through the first supply passage 51b, is ejected from the first ejection hole 51c toward the portion between the first inner race 31a and the first outer race 31b. In this case, the flow passage cross-sectional area of the first ejection hole 51c is smaller than the flow passage cross-sectional area of the first supply passage 51b. Thus, the lubricant is constricted when passing through the first ejection hole 51c and forcefully ejected from the first ejection hole 51c toward the portion between the first inner race 31a and the first outer race 31b. In this manner, the lubricant is efficiently supplied to the portion between the first inner race 31a and the first outer race 31b to improve the slidability between the first outer race 31b and the first balls 31c and the slidability between the first inner race 31a and the first balls 31c.

The lubricant, which has passed through the second supply passage 52b, is ejected from the second ejection hole 52c toward the portion between the second inner race 32a and the second outer race 32b. In this case, the flow passage cross-sectional area of the second ejection hole 52c is smaller than the flow passage cross-sectional area of the second supply passage 52b. Thus, the lubricant is constricted when passing through the second ejection hole 52c and forcefully ejected from the second ejection hole 52c toward the portion between the second inner race 32a and the second outer race 32b. In this manner, the lubricant is efficiently supplied to the portion between the second inner race 32a and the second outer race 32b to improve the slidability between the second outer race 32b and the second balls 32c and the slidability between the second inner race 32a and the second balls 32c.

The above embodiment provides the following advantages.
(1) The first oil supply member 51 and the second oil supply member 52 are attached to the motor housing 12. The first oil supply member 51 includes the first supply passage 51b and the first ejection hole 51c. The first supply passage 51b extends inside the first oil supply member 51 in the axial direction in communication with the oil supply unit 37. The first ejection hole 51c is configured to be in communication with the first supply passage 51b and eject lubricant toward the portion between the first inner race 31a and the first outer race 31b.
   The second oil supply member 52 includes the second supply passage 52b and the second ejection hole 52c. The second supply passage 52b extends inside the second oil supply member 52 in the axial direction in communication with the oil supply unit 37. The second ejection hole 52c is configured to be in communication with the second supply passage 52b and eject lubricant toward the portion between the second inner race 32a and the second outer race 32b.
   With this structure, the lubricant from the oil supply unit 37 is ejected from the first ejection hole 51c via the first supply passage 51b toward the portion between the first inner race 31a and the first outer race 31b. Further, the lubricant is ejected from the second ejection hole 52c via the second supply passage 52b toward the portion between the second inner race 32a and the second outer race 32b.
   For example, after the lubricant is supplied to the outer circumferential surface of the first outer race 31b, the lubricant supplied to the outer circumferential surface of the first outer race 31b may flow into the portion between the first inner race 31a and the first outer race 31b. Alternatively, after the lubricant is supplied to the outer circumferential surface of the second outer race 32b, the lubricant supplied to the outer circumferential surface of the second outer race 32b may flow into the portion between the second inner race 32a and the second outer race 32b. In comparison with such cases, the lubricant is efficiently supplied to the portion between the first inner race 31a and the first outer race 31b and to the portion between the second inner race 32a and the second outer race 32b.
(2) The flow passage cross-sectional areas of the first ejection hole 51c and the second ejection hole 52c are smaller than the flow passage cross-sectional areas of the first supply passage 51b and the second supply passage 52b. With this structure, the lubricant from the oil supply unit 37 flows into the first supply passage 51b and the second supply passage 52b and is constricted when passing through the first ejection hole 51c and the second ejection hole 52c to be forcefully ejected from the first ejection hole 51c and the second ejection hole 52c toward the portion between the first inner race 31a and the first outer race 31b and the portion between the second inner race 32a and the second outer race 32b. As a result, the lubricant is supplied with improved efficiency to the portion between the first inner race 31a and the first outer race 31b and the portion between the second inner race 32a and the second outer race 32b.
(3) The first oil supply member 51 has the first securing portion 51a secured to the motor housing 12. The second oil supply member 52 has the second securing portion 52a secured to the motor housing 12. With this structure, the first oil supply member 51 is attached to the motor housing 12 by merely inserting the first oil supply member 51 into the first insertion hole 41 and securing the first securing portion 51a to the motor housing 12. The second oil supply member 52 is likewise attached to the motor housing 12 by merely inserting the second oil supply member 52 into the second insertion hole 42 and securing the second securing portion 52a to the motor housing 12.
(4) The first outer circumferential portion 51d and the first straight portion 38a form a positioning mechanism that positions the first oil supply member 51 relative to the motor housing 12 such that the first ejection hole 51c faces the portion between the first inner race 31a and the first outer race 31b. The second outer circumferential portion 52d and the second straight portion 39a form a positioning mechanism that positions the second oil supply member 52 relative to the motor housing 12 such that the second ejection hole 52c faces the portion between the second inner race 32a and the second outer race 32b.
   With this structure, the first oil supply member 51 is attached to the motor housing 12 with the first outer circumferential portion 51d and the first straight portion 38a in a state where the first oil supply member 51 is positioned relative to the motor housing 12 such that the first ejection hole 51c faces the portion between the first inner race 31a and the first outer race 31b. This allows the lubricant ejected from the first ejection hole 51c to be more readily supplied to the portion between the first inner race 31a and the first outer race 31b. Further, the second oil supply member 52 is attached to the motor housing 12 with the second outer circumferential portion 52d and the second straight portion 39a in a state where the second oil supply member 52 is positioned relative to the motor housing 12 such that the second ejection hole 52c faces the portion between the second inner race 32a and the second outer race 32b. This allows the lubricant ejected from the second ejection hole 52c to be more readily supplied to the portion between the second inner race 32a and the second outer race 32b.
(5) The present embodiment eliminates the need to attach a guide member, which guides lubricant toward the portion between the first inner race 31a and the first outer race 31b, to an end face facing the motor chamber 121 in the first bearing case 16. Further, the present embodiment also eliminates the need to attach a guide member, which guides lubricant toward the portion between the second inner race 32a and the second outer race 32b, to an end face facing the motor chamber 121 in the second bearing case 17. This simplifies the structure of the electric turbomachine 10.

The above embodiment may be modified as follows.

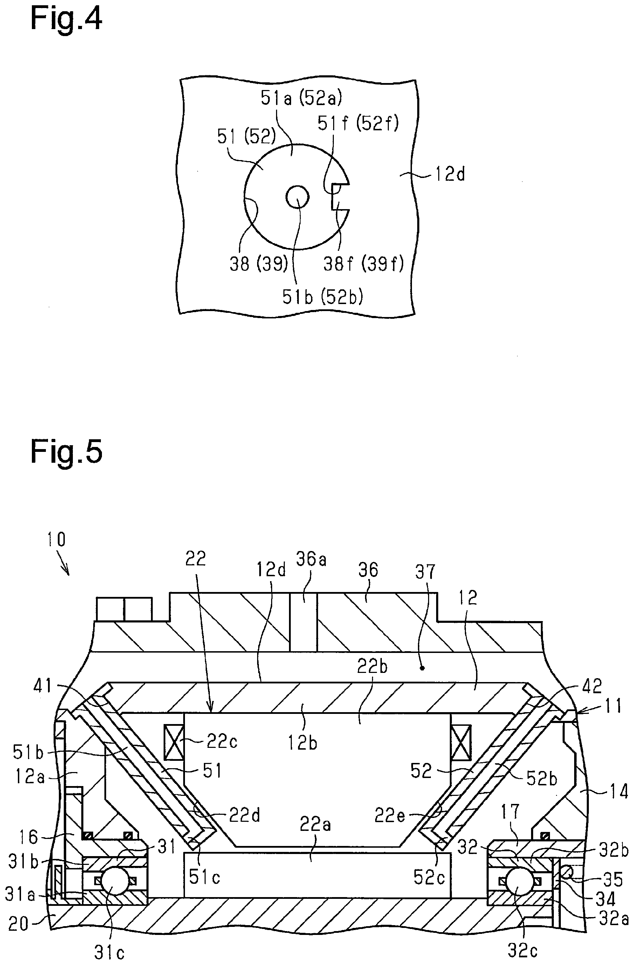

As shown in Fig. 4, the inner circumferential surface of the first positioning recess 38 may partially include a protrusion 38f that protrudes inwardly in the first positioning recess 38. The outer circumferential surface of the first securing portion 51a may include a recess 51f configured to be secured to the protrusion 38f. Movement of the first oil supply member 51 in the circumferential direction may be restricted when the protrusion 38f is secured to the recess 51f. The movement of the first oil supply member 51 in the circumferential direction is restricted when the protrusion 38f is secured to the recess 51f. In this state, the first ejection hole 51c opens in the outer circumferential surface of the first oil supply member 51 such that the first ejection hole 51c faces the portion between the first inner race 31a and the first outer race 31b in the axial direction of the rotary shaft 20. In this manner, the protrusion 38f and the recess 51f may form a positioning mechanism that positions the first oil supply member 51 relative to the motor housing 12 such that the first ejection hole 51c faces the portion between the first inner race 31a and the first outer race 31b. In addition, the inner circumferential surface of the second positioning recess 39 may partially include a protrusion 39f that protrudes inwardly in the second positioning recess 39. The outer circumferential surface of the second securing portion 52a may include a recess 52f configured to be secured to the protrusion 39f.

As shown in Fig. 5, the first oil supply member 51 and the second oil supply member 52 may be attached to the motor housing 12 so as to be inclined relative to the axial direction of the rotary shaft 20. The stator 22b includes annular cutouts 22d and 22e that extend straight, while inclined relative to the axial direction of the rotary shaft 20, toward the inner circumferential surface of the stator 22b from the two end faces in the axial direction of the rotary shaft 20. The first oil supply member 51 and the second oil supply member 52 extend along the cutouts 22d and 22e from the oil supply unit 37. Axial ends of the first oil supply member 51 and the second oil supply member 52 located at sides opposite to the oil supply unit 37 are arranged inside the cutouts 22d and 22e. With this structure, in the axial direction of the rotary shaft 20, the distance between the electric motor 22 and the first rolling bearing 31 is reduced and the distance between the electric motor 22 and the second rolling bearing 32 is reduced. This reduces the size of the electric turbomachine 10 in the axial direction of the rotary shaft 20.

In the embodiment, the first positioning recess 38 and the second positioning recess 39 may be omitted from the bottom surface 12d of the recess 12c. In this case, contact portions may project from the bottom surface 12d of the recess 12c and be configured to contact the first outer circumferential portion 51d of the first securing portion 51a and the second outer circumferential portion 52d of the second securing portion 52a. Movement of the first oil supply member 51 and the second oil supply member 52 in the circumferential direction may be restricted by arranging the first securing portion 51a and the second securing portion 52a on the bottom surface 12d of the recess 12c and having the first outer circumferential portion 51d and the second outer circumferential portion 52d contact the contact portions, which project from the bottom surface 12d of the recess 12c.

In the embodiment, the first ejection hole 51c may open in an end face of the first oil supply member 51 opposite to the oil supply unit 37 in the axial direction. Likewise, the second ejection hole 52c may open in an end face of the second oil supply member 52 opposite to the oil supply unit 37 in the axial direction. In this case, the first oil supply member 51 and the second oil supply member 52 need to be attached to the motor housing 12 inclined relative to the axial direction of the rotary shaft 20. Further, the first ejection hole 51c needs to face the portion between the first inner race 31a and the first outer race 31b, and the second ejection hole 52c needs to face the portion between the second inner race 32a and the second outer race 32b.

In the embodiment, the first oil supply member 51 and the second oil supply member 52 do not need to extend straight and may be, for example, curved or bent to be L-shaped.

In the embodiment, the first outer circumferential portion 51d of the first securing portion 51a may be omitted. The first straight portion 38a of the first positioning recess 38 may be omitted. Likewise, the second outer circumferential portion 52d of the second securing portion 52a may be omitted. The second straight portion 39a of the second positioning recess 39 may be omitted.

In the embodiment, the first oil supply member 51 and the second oil supply member 52 may be attached to the inner circumferential surface of the circumferential wall 12b of the motor housing 12 by a fastening member such as a bolt.

In the embodiment, the flow passage cross-sectional areas of the first ejection hole 51c and the second ejection hole 52c may be the same as the flow passage cross-sectional areas of the first supply passage 51b and the second supply passage 52b. The flow passage cross-sectional areas of the first ejection hole 51c and the second ejection hole 52c may be greater than the flow passage cross-sectional areas of the first supply passage 51b and the second supply passage 52b.

In the embodiment, the first rolling bearing 31 and the second rolling bearing 32 may be, for example, a roller bearing including cylindrical rolling elements.

In the embodiment, the electric turbomachine 10 may include a rolling bearing in either the first bearing that rotationally supports a portion of the rotary shaft 20, which is close to the impeller 21 in the axial direction of the rotary shaft 20, or the second bearing that rotationally supports a portion of the rotary shaft 20, which is further distant from the impeller 21 than the first bearing in the axial direction of the rotary shaft 20.

In the embodiment, the electric turbomachine 10 may be used as an electric compressor that configures part of an air conditioner and compresses a refrigerant as a fluid, for example.

## Claims

1. An electric turbomachine comprising:
a housing (11);
a rotary shaft (20) rotationally supported in the housing (11) by a rolling bearing (31, 32);
an impeller (21) connected to one side of the rotary shaft (20) in an axial direction; and
an electric motor (22) that is accommodated in the housing (11) and rotates the rotary shaft (20), wherein
the rolling bearing (31, 32) includes an inner race (31a, 32a) fixed to the rotary shaft (20), an outer race (31b, 32b) arranged outward from the inner race (31a, 32a), and a rolling element (31c, 32c) arranged between the inner race (31a, 32a) and the outer race (31b, 32b),
the housing (11) includes an oil supply unit (37) supplied with lubricant,
the electric turbomachine being **characterized in that** a tubular oil supply member (51, 52) is attached to the oil supply unit (37) and the housing (11),
the oil supply member (51, 52) includes
a supply passage (51b, 52b) that extends inside the oil supply member (51, 52) in an axial direction of the oil supply member (51, 52) in communication with the oil supply unit (37) at a first end of the oil supply member (51, 52), and
an ejection hole (51c, 52c) configured to be in communication with the supply passage (51b, 52b) and eject the lubricant toward a portion between the inner race (31a, 32a) and the outer race (31b, 32b) of the rolling bearing (31, 32), wherein
a flow passage cross-sectional area of the ejection hole (51c, 52c) is smaller than a flow passage cross-sectional area of the supply passage (51b, 52b).

2. The electric turbomachine according to claim 1, wherein
the oil supply member (51, 52) extends straight,
the housing (11) includes an insertion hole (41, 42) into which the oil supply member (51, 52) is inserted, and
the oil supply member (51, 52) includes a securing portion (51a, 52a) secured to the housing (11) at the first end.

3. The electric turbomachine according to claim 1 or 2, comprising a positioning mechanism (38a, 51d) that positions the oil supply member (51, 52) relative to the housing (11) such that the ejection hole (51c, 52c) faces a portion between the inner race (31a, 32a) and the outer race (31b, 32b).

## Patentansprüche

1. Elektrische Turbomaschine mit:
einem Gehäuse (11);
einer Drehwelle (20), die durch ein Wälzlager (31, 32) in dem Gehäuse (11) drehbar gestützt ist;
einem Laufrad (21), das mit einer Seite der Drehwelle (20) in einer Axialrichtung verbunden ist; und
einem elektrischen Motor (22), der in dem Gehäuse (11) aufgenommen ist und die Drehwelle (20) dreht, wobei
das Wälzlager (31, 32) einen Innenring (31a, 32a), der an der Drehwelle (20) fixiert ist, einen Außenring (31b, 32b), der außen von dem Innenring (31a, 32a) angeordnet ist, und ein Wälzelement (31c, 32c) hat, das zwischen dem Innenring (31a, 32a) und dem Außenring (31b, 32b) angeordnet ist,
das Gehäuse (11) eine Ölzufuhreinheit (37) hat, die mit einem Schmiermittel versorgt wird,
wobei die elektrische Turbomaschine **dadurch gekennzeichnet ist, dass**
ein rohrförmiges Ölzufuhrbauteil (51, 52) an der Ölzufuhreinheit (37) und dem Gehäuse (11) angebracht ist,
das Ölzufuhrbauteil (51, 52)
einen Zufuhrdurchgang (51b, 52b), der sich im Inneren des Ölzufuhrbauteils (51, 52) in einer Axialrichtung des Ölzufuhrbauteils (51, 52) in Verbindung mit der Ölzufuhreinheit (37) an einem ersten Ende des Ölzufuhrbauteils (51, 52) erstreckt, und
ein Ausstoßloch (51c, 52c) hat, das gestaltet ist, um mit dem Zufuhrdurchgang (51b, 52b) in Verbindung zu sein und das Schmiermittel zu einem Abschnitt zwischen dem Innenring (31a, 32a) und dem Außenring (31b, 32b) des Wälzlagers (31, 32) auszustoßen, wobei
eine Strömungsdurchgangsquerschnittsfläche des Ausstoßlochs (51c, 52c) kleiner ist als eine Strömungsdurchgangsquerschnittsfläche des Zufuhrdurchgangs (51b, 52b).

2. Elektrische Turbomaschine noch Anspruch 1, wobei
das Ölzufuhrbauteil (51, 52) sich gerade erstreckt,
das Gehäuse (11) ein Einsetzloch (41, 42) hat, in das das Ölzufuhrbauteil (51, 52) eingesetzt ist, und
das Ölzufuhrbauteil (51, 52) einen Sicherungsabschnitt (51a, 52a) hat, der an dem Gehäuse (11) an dem ersten Ende gesichert ist.

3. Elektrische Turbomaschine noch Anspruch 1 oder 2, des Weiteren mit einem Positionierungsmechanismus (38a, 51d), der das Ölzufuhrbauteil (51, 52) relativ zu dem Gehäuse (11) derart positioniert, dass das Ausstoßloch (51c, 52c) einem Abschnitt zwischen dem Innenring (31a, 32a) und dem Außenring (31b, 32b) des Wälzlagers (31, 32) zugewandt ist.

## Revendications

1. Turbomachine électrique comprenant :
un boîtier (11) ;
un arbre rotatif (20) supporté, en rotation, dans le boîtier (11) par un palier à rouleaux (31, 32) ;
un impulseur (21) raccordé à un côté de l'arbre rotatif (20) dans une direction axiale ; et
un moteur électrique (22) qui est logé dans le boîtier (11) et fait tourner l'arbre rotatif (20), dans laquelle :
le palier à rouleaux (31, 32) comprend un chemin de roulement interne (31a, 32a) fixé à l'arbre rotatif (20), un chemin de roulement externe (31b, 32b) agencé vers l'extérieur à partir du chemin de roulement interne (31a, 32a), et un élément de roulement (31c, 32c) agencé entre le chemin de roulement interne (31a, 32a) et le chemin de roulement externe (31b, 32b),
le boîtier (11) comprend une unité d'alimentation en huile (37) alimentée avec un lubrifiant,
la turbomachine électrique étant **caractérisée en ce que** :
un élément d'alimentation en huile tubulaire (51, 52) est fixé à l'unité d'alimentation en huile (37) et au boîtier (11),
l'élément d'alimentation en huile (51, 52) comprend :
un passage d'alimentation (51b, 52b) qui s'étend à l'intérieur de l'élément d'alimentation en huile (51, 52) dans une direction axiale de l'élément d'alimentation en huile (51, 52) en communication avec l'unité d'alimentation en huile (37) au niveau d'une première extrémité de l'élément d'alimentation en huile (51, 52), et
un trou d'éjection (51c, 52c) configuré pour être en communication avec le passage d'alimentation (51b, 52b) et éjecter le lubrifiant vers une partie entre le chemin de roulement interne (31a, 32a) et le chemin de roulement externe (31b, 32b) du palier à rouleaux (31, 32), dans lequel :
la surface transversale de passage d'écoulement du trou d'éjection (51c, 52c) est inférieure à une surface transversale de passage d'écoulement du passage d'alimentation (51b, 52b).

2. Turbomachine électrique selon la revendication 1, dans laquelle :
l'élément d'alimentation en huile (51, 52) s'étend tout droit,
le boîtier (11) comprend un trou d'insertion (41, 42) dans lequel l'élément d'alimentation en huile (51, 52) est inséré, et
l'élément d'alimentation en huile (51, 52) comprend une partie de fixation (51a, 52a) fixée sur le boîtier (11) au niveau de la première extrémité.

3. Turbomachine électrique selon la revendication 1 ou 2, comprenant un mécanisme de positionnement (38a, 51d) qui positionne l'élément d'alimentation en huile (51, 52) par rapport au boîtier (11) de sorte que le trou d'éjection (51c, 52c) fait face à une partie entre le chemin de roulement interne (31a, 32a) et le chemin de roulement externe (31b, 32b).
